# EUROPEAN PATENT APPLICATION

(11) **EP 1 617 245 A1**
(43) Date of publication of application: **18.01.2006**
(21) Application number: 04721643.7
(22) Date of filing: 18.03.2004
(51) Int. Cl.: G02B 6/42

(54) **PACKAGE MODULE**

(30) Priority: 18.04.2003 JP 2003114531
(71) Applicant: MURATA MANUFACTURING CO., LTD., Nagaokakyo-shi Kyoto-fu 617-8555 (JP)
(72) Inventor: OHTERA, Shozo, c/o Murata Manufacturing CO., LTD., Nagaokakyo-shi, Kyoto-fu 617-8555 (JP)
(74) Representative: Schoppe, Fritz
(86) International application number: PCT/JP2004/003666
(87) International publication number: WO 2004/095104

(57) **Abstract**

A package module includes a module case 4 and adapter case attached to the module case 4. The module case 4 accommodates a circuit board, and the adapter is used for connecting an external connector. An adapter case 11 constituting the adapter has sides with no opening. An opening at an end of the adapter case 11 functions as an entry to receive the external connector. The other opening at the other end functions as a connection hole 11c to be attached to the module case 4. A fit-receiving portion 15 is mounted on the upper wall adjacent to the connection hole of the adapter case 11 in such a way that a fit-receiving opening faces down. A fit projection 17 is mounted on the module case 4. An arm 12 mounted on the module case 4 is inserted into the adapter case 11 through the connection opening 11c of the adapter case 11, and the fit projection 17 is opposed to the fit-receiving opening of the fit-receiving portion 15. The module case 4 is then moved upward relative to the adapter case 11, and the fit projection 17 is fit into the fit-receiving portion 15. Therefore, the module case 4 and the adapter case 11 are connected together.

## Description

### Technical Field

The present invention relates to a package module having a module case in which a circuit board is accommodated.

### Background Art

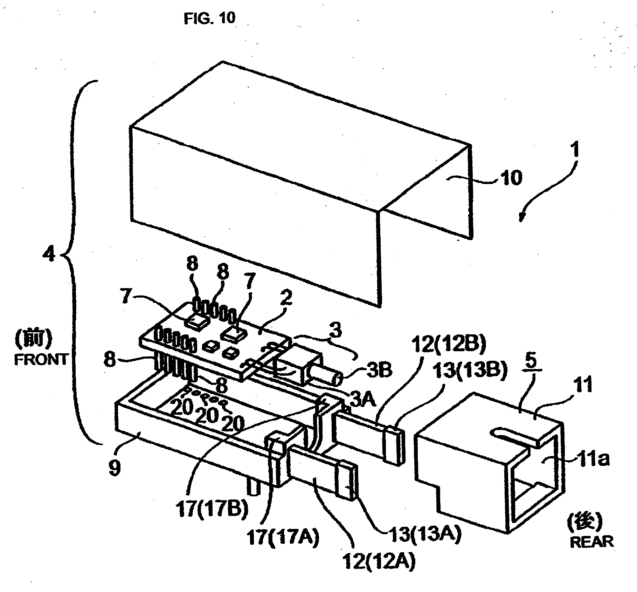

There are various package modules having cases in which circuit boards are accommodated. One such package module is an optical communication module used for optical communications. Fig. 10 is a schematic exploded view of an optical communication module (package module) developed by the applicant of the present invention. A package module 1 includes a circuit board 2, an optical module unit 3, a module case 4 accommodating the circuit board 2 and the optical module unit 3, and an adapter 5.

The optical module unit 3 includes a circuit portion 3A and a ferrule portion 3B. The circuit portion 3A has at least one (not shown) of a light-emitting device (e.g., laser diode (LD)) and a photoreceptor device (e.g., photodiode (PD)) inside its case. In the case of the circuit portion 3A, one or both of a conversion part for converting an electric signal to an optical signal by using the light-emitting device and a conversion part for converting an optical signal to an electric signal by using the photoreceptor device is arranged.

The ferrule portion 3B includes a ferrule (not shown) through which an optical fiber (not shown) passes, a sleeve holding the ferrule, and a ferrule case accommodating the sleeve. The ferrule case is integrated with the case of the circuit portion 3A. One end of the optical fiber passing through the ferrule is exposed at an end face of the ferrule, the end face adjacent to the circuit portion 3A, and the optical fiber is optically coupled to the light-emitting device or the photoreceptor device of the circuit portion 3A. The other end of the optical fiber is exposed at the other external end face of the ferrule in order to establish external connection.

A unit 7 and a circuit pattern (not shown) are formed on the circuit board 2 so as to form a circuit. The circuit is electrically connected to a circuit of the optical module unit 3. Such a circuit of the circuit board 2 is, for example, an amplifier circuit for electric signals. In this instance shown in Fig. 10, terminals 8 for connecting the circuit of the circuit board 2 to an external circuit are mounted on the circuit board 2.

The module case 4 includes a base case 9 and a lid case 10. In an inner space defined by an assembly of the base case 9 and the lid case 10, the circuit board 2 and the optical module unit 3 are accommodated. The base case 9 has holes 20 formed through the bottom wall at locations corresponding to the terminals 8 of the circuit board 2. When the circuit board 2 is accommodated in the module case 4, the terminals 8 of the circuit board 2 protrude from the inside of the module case 4 to the outside through the holes 20.

On the periphery of the base case 9 of the module case 4, arms 12 (12A and 12B) extending out are mounted. The arms 12A and 12B are separately arranged in parallel in a lateral direction. The arms 12A and 12B have nails 13 (13A and 13B) at their tips, respectively. The arms 12 and the nails 13 are used for fitting into an external connector (optical connector) inserted into the adapter 5, which is described below, to fix the external connector to the package module 1. The arms 12 and nails 13 are, for example, integrally formed with the base case 9 by molding.

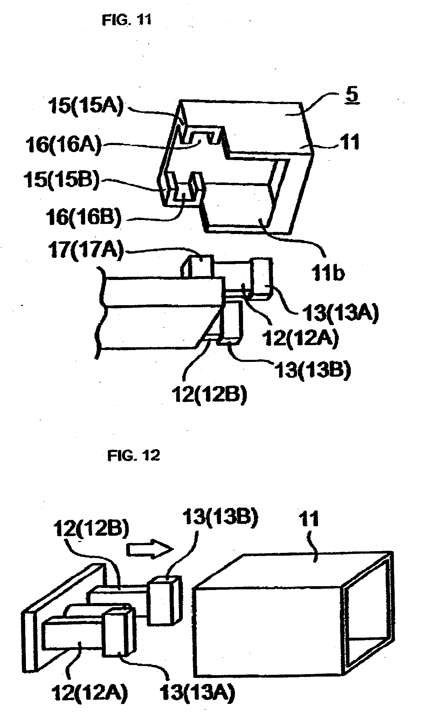

The adaptor 5 includes an adapter case 11 to which the external connector is to be inserted. The adapter case 11 accommodates the arms 12 and nails 13 and is attached to the base case 9. The adapter case 11 has an entry 11a to receive an external optical connector at its rear end. As shown in Fig. 11, the adapter case 11 has an opening 11b that is open from the bottom face to the front end face, as well. The opening 11b of the adapter case 11 is used for guiding the arms 12 and nails 13 into the inner space when the adapter case 11 is attached to the base case 9. The adapter case 11 has fit-receiving portions 15 (15A and 15B) at the front end on the upper wall such that fit-receiving openings 16 (16A and 16B) face down.

The base case 9 has fit projections 17 (17A and 17B) projecting upward at the periphery near the arms 12 (12A and 12B). The fit projections 17 can fit into the fit-receiving portions 15 of the adapter case 11. For example, the adapter case 11 is placed above the arms 12 in a position as shown in Fig. 11, and the adapter case 11 is then moved downward toward the arms 12. Therefore, the arms 12 and nails 13 are accommodated in the inner space of the adapter case 11 through the opening 11b of the adapter case 11, and the fit projections 17 (17A and 17B) of the base case 9 are fit into the fit-receiving portions 15 (15A and 15B) of the adapter case 11. In this way, the adapter case 11 accommodating the arms 12 and nails 13 in the inner space is attached to the base case 9.

An external optical connector is inserted into the adapter case 11 attached to the base case 9 through the entry 11a, and the external optical connector is then fixed to the base case 9 (package module 1) by using the arms 12 and nails 13. Thereby, an end face of an optical fiber passing through the optical connector and an end face of an optical fiber passing through the ferrule of the optical module unit 3 are butt-joined.

In the instance shown in Fig. 10, the arms 12 are integrated with the base case 9. However, as shown in Fig. 12, the arms 12 and the nails 13 may be formed separately from the base case 9. In such an arrangement, for example, the arms 12 and nails 13 are combined with the adapter case 11 formed independently, and the assembly is mounted to the base case 9 with an adhesive or the like. As shown in Fig. 13, aside from the base case 9, an integrated structure of the arms 12, nails 13, and the adapter case 11 may be formed by molding. In such an arrangement, the integrated structure is mounted to the base case 9 with an adhesive or the like.

In the instance shown in Fig. 12, however, a manufacturing process is complicated since the process involves the steps of forming the arms 12 and nails 13, forming the adapter case 11 independently thereof, assembling the arms 12 and nails 13 and the adapter case 11, and then joining the assembly to the base case 9 with an adhesive. Additionally, there are problems in that the reliability of strength of the package module 1 is reduced since adhesive joining leads to low bonding strength and an adhesive is prone to deteriorate with age.

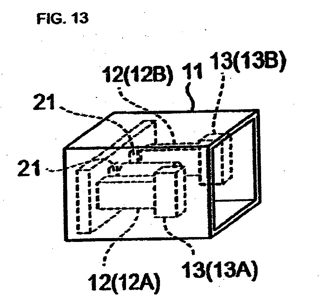

In the instance shown in Fig. 13, the adapter case 11, the arms 12, and the nails 13 are integrated together. Therefore, the step of assembling the adapter case 11 and both the arms 12 and the nails 13 can be eliminated. However, for technical reasons in molding, perforations 21 shown in Fig. 13 are opened near the bases of the arms 12. The perforations 21 reduce the strength of the bases of the arms 12, thus increasing the risk of breakage of the arms 12.

In the instance shown in Fig. 10, the base case 9, the arms 12, and the nails 13 are integrated together. Therefore, it is not necessary to bond the arms 12 and the base case 9. Also, the perforations 21 resulting from molding are not formed near the bases of the arms 12. However, the adapter case 11 has the wide opening 11b at its bottom, and therefore, dust is apt to enter the inside of the adapter case 11 from the opening 11b. As a result, since dust is apt to enter the inside of the adapter case 11 from the opening 11b, for example, when an optical connector is inserted into the adapter case 11 in order to optically couple an optical fiber of the optical connector to an optical fiber of the optical module unit 3, the optical coupling conditions can be degraded by dust entering the adapter case 11.

Accordingly, an object of the present invention is to provide a package module capable of increasing the reliability of strength and connector connection.

### Disclosure of Invention

A package module according to an aspect of the present invention includes a module case and an adapter for connecting an external connector. The module case accommodates a circuit board, and the adapter is attached to the module case. In this package module, the adapter includes an adapter case having sides with no opening; an opening defined by the sides of the adapter case at one end functions as an entry to receive the external connector; the other opening of the adapter case at the other end functions as a connection hole for being attached to the module case; a fit-receiving portion is mounted on the upper wall adjacent to connection hole of the adapter case in such a way that a fit-receiving opening faces down; the module case includes an adapter-case connection section to be inserted into the connection hole of the adapter case; the adapter-case connection section includes a fit projection to be fit into the fit-receiving portion of the adapter case and a pivot-point part that comes into contact with the adapter case and that functions as a pivot point of the adapter-case connection section when the adapter-case connection section is inserted into the adapter case up to a specified position through the connection hole of the adapter case; an arm projecting forward is integrated with the adapter-case connection section; a nail for fixing the external connector inserted into the adapter case is mounted on the tip of the arm, the opening width defined between the downward end of the fit-receiving portion of the adapter case and the bottom of the connection hole is smaller than the vertical height of the fit projection of the module case; the fit projection of the module case is arranged so as to be opposed to the fit-receiving opening of the fit-receiving portion of the adapter case when the adapter-case connection section of the module case is horizontal to the bottom of the adapter case after being inserted up to a specified position through the connection hole of the adapter case while being inclined in an upward direction relative to the bottom of the adapter case and after being pivoted about the pivot-point part serving as a pivot point; and the fit projection is fit into the fit-receiving portion by arranging the fit projection of the module case and the fit-receiving portion of the adapter case in an opposed manner and by moving the module case upward relative to the adapter case so that the adapter case is attached to the module case.

A package module according to another aspect of the present invention includes a module case and an adapter for connecting an external connector. The module case accommodates a circuit board, and the adapter is attached to the module case. In this package module, the adapter includes an adapter case having sides with no opening; an opening defined by the sides of the adapter case at one end functions as an entry to receive the external connector; the other opening of the adapter case at the other end functions as a connection hole for being attached to the module case; a fit-receiving portion is mounted on the upper wall adjacent to the connection hole of the adapter case in such a way that a fit-receiving opening faces down; the module case includes an adapter-case connection section to be inserted into the connection hole of the adapter case; the adapter-case connection section includes a fit projection to be fit into the fit-receiving portion of the adapter case; an arm projecting forward is integrated with the adapter-case connection section; a nail for fixing the external connector inserted into the adapter case is mounted on the tip of the arm; the adapter case includes an insertion stopping portion for stopping forward movement of the adapter-case connection section when the adapter-case connection section is inserted into the adapter case through the connection hole of the adapter case and moved forward to a position where the fit projection of the adapter-case connection section is opposed to the fit-receiving opening of the fit-receiving portion of the adapter case; and the fit projection is fit into the fit-receiving portion by inserting the adapter-case connection section into the adapter case through the connection hole of the adapter case, moving the adapter-case connection section forward while the arm of the adapter-case connection section are moved along the bottom wall of the adapter case until the adapter-case connection section is stopped by the insertion stopping portion, arranging the fit projection of the module case and the fit-receiving opening of the fit-receiving portion of the adapter case in an opposed manner, and then moving the module case upward relative to the adapter case so that the adapter case is attached to the module case.

According to these aspects of the present invention, the module case and the arms are integrated together. Therefore, there is no need to join the arms to the module case with an adhesive, and a manufacturing process is not complicated. As a result, a problem resulting from an adhesive is eliminated, and the strength of the arms is not decreased.

According to the aspects of the present invention, the adapter case has sides with no opening. Therefore, the adapter case attached to the module case has a single opened portion, the entry, because the other opening is blocked by the module case. As a result, dust is substantially prevented from entering the adapter case. When the package module is an optical communication module, for example, dust can enter an optical-coupling part where an optical fiber arranged in the package module is optically coupled to another optical fiber arranged in an optical connector inserted to the adapter case and degrade optical coupling conditions. The package module according to the aspects of the present invention avoids this problem.

According to the aspects of the present invention, the adapter case has the sides with no opening, and therefore, the adapter case has reduced openings. As a result, the strength of the adapter case is increased.

When the opening width defined between the downward end of each of the fit-receiving portions of the adapter case and the bottom of the connection hole of the adapter case is smaller than the vertical height of each of the fit projections of the adapter-case connection section in the module case, or when the formula, L3 ≥ Ho - t - L1, is satisfied where Ho is the outer height of the adapter case at the connection hole in the vertical direction; t is the thickness of each of upper and lower walls of the adapter case; L1 is the vertical length between the top of the adapter case and the downward end of the fit-receiving portion; and L3 is the vertical length between the top of the fit projection and the lowermost part of each of the arms including the nails, in order to attach the adapter case to the module case, the adapter-case connection section of the module case is inserted into the adapter case while being inclined in an upward direction relative to the bottom of the adapter case. The adapter-case connection section is pivoted about contact parts of the adapter-case connection section as pivot points, the contact parts being in contact with the adapter case when the adapter-case connection section of the module case is moved up to a specified position, so as to be horizontal to the bottom of the adapter case. These fit projections of the module case are designed so as to be opposed to the fit-receiving openings of these fit-receiving portions of the adapter case when the adapter-case connection section is horizontal to the bottom of the adapter case. Therefore, the fit between the fit projections of the module case and the fit-receiving portions of the adapter case is achieved only by moving the module case upward relative to the adapter case after the adapter-case connection section is pivoted. In this way, the adapter case is attached to the module case.

Even when the opening width defined between the downward end of each of the fit-receiving portions of the adapter case and the bottom of the connection hole is smaller than the vertical height of each of the fit projections of the adapter-case connection section in the module case, the adapter case can be attached to the module case. For the sake of convenience, a package module assembled by this process of attaching the adapter case to the module case is referred to as a slanting-arm-insertion-type package module.

For attachment of the adapter case to the module case, the slanting-arm-insertion-type package module requires a plurality of operations including inserting the adapter-case connection section of the module case to the adapter case, pivoting the adapter-case connection section after the insertion, and fitting these fit projections of the module case into these fit-receiving portions of the adapter case. This prevents the adapter case from being readily disconnected from the module case.

Additionally, in the slanting-arm-insertion-type package module, the adapter-case connection section of the module case is inserted into the adapter case and then pivoted while the projecting edges of the fit projections are in contact with the opening edges of the fit-receiving portions. Therefore, if the adapter case starts disconnecting from the module case, the fit projections of the module case are caught in the opening edges of the fit-receiving portions of the adapter case. As a result, disconnections of the adapter case from the module case are prevented with reliability.

Furthermore, in the slanting-arm-insertion-type package module, the opening width defined between the downward end of each of the fit-receiving portions of the adapter case and the bottom of the connection hole is smaller than the vertical height of each of the fit projections of the adapter-case connection section in the module case. The reduction of the opening width can decrease the height of the adapter case in the vertical direction. This can miniaturize (reduce the profile of) the adapter case, and therefore, the package module can be miniaturized.

Additionally, in the present invention, instead of the slanting-arm-insertion-type package module, a horizontal-arm-insertion-type package module (i.e., an arrangement in which the adapter-case connection section of the module case is inserted to the adapter case through the connection hole of the adapter case; the adapter-case connection section is then moved forward while the arms of the module case are moved along the bottom wall of the adapter case so that these fit projections of the module case are opposed to the fit-receiving openings of these fit-receiving portions of the adapter case; and the module case is then moved upward relative to the adapter case so that the fit projections are fit into the fit-receiving portions and the adapter case is attached to the module case) allows the attachment of the adapter case to the module case by simple operations. Moreover, the advantageous effect of reducing the risk of disconnections of the adapter case from the module case is achieved.

As described above, according to the present invention, a package module that has increased reliability of strength and connector connection and facilitates cost reduction by simplifying a manufacturing process is provided.

### Brief Description of the Drawings

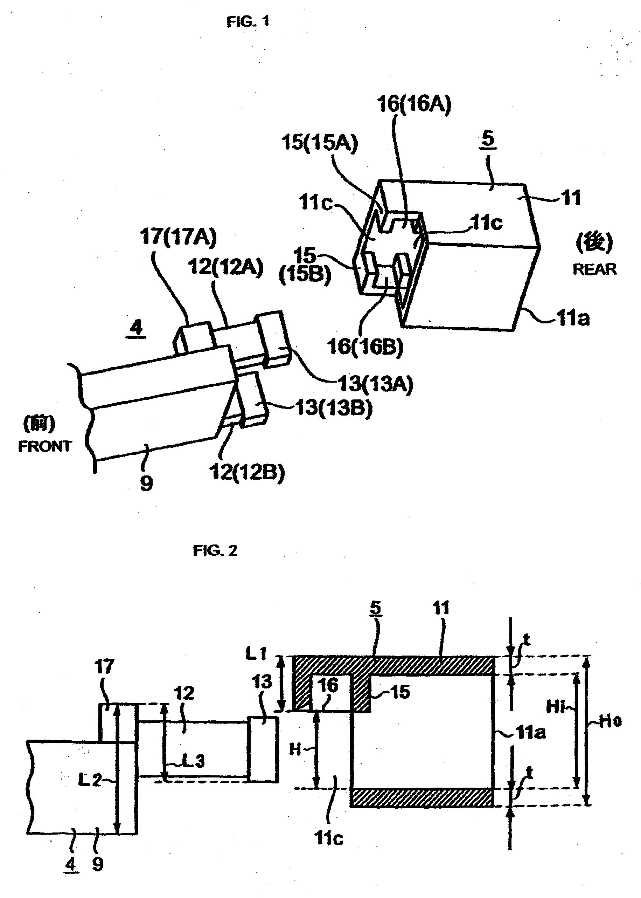

Fig. 1 is an illustration of a package module according to a first embodiment, showing characteristic components.
Fig. 2 is an illustration for explanation of the relationship of dimensions between an adapter case and an area where fit projections of a module case are formed in the package module of the first embodiment. As with Fig. 2,

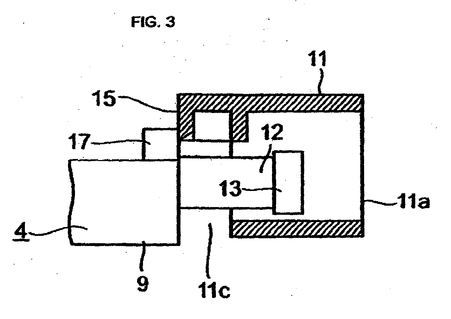

Fig. 3 is an illustration for explanation of the relationship of dimensions between the adapter case and the area where the fit projections of the module case are formed in the package module of the first embodiment.

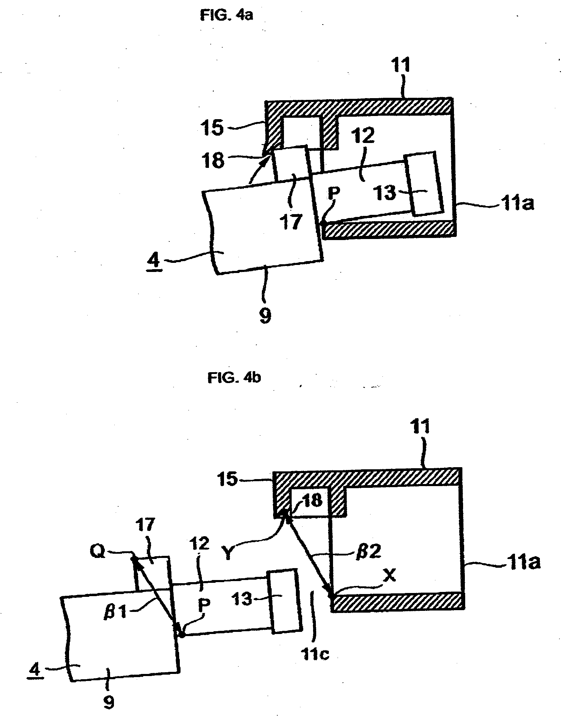

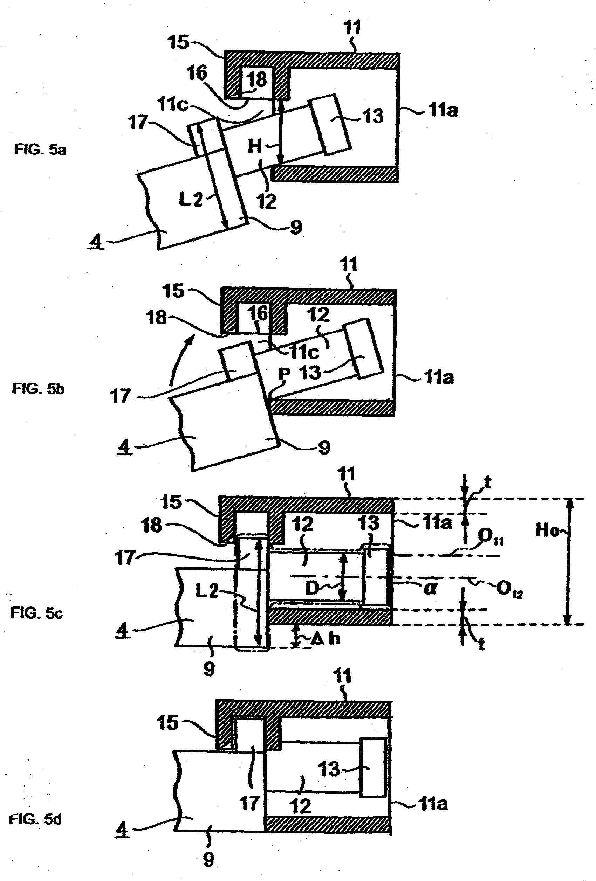

Fig. 4a illustrates a characteristic operation in a step of assembling the package module of the first embodiment. Fig. 4b is an illustration for explanation of size conditions for realizing the state shown in Fig. 4a in the package module of the first embodiment. Figs. 5a, 5b, 5c, and 5d are illustrations for explanation of a step of attaching the adapter case to the module case in the first embodiment.

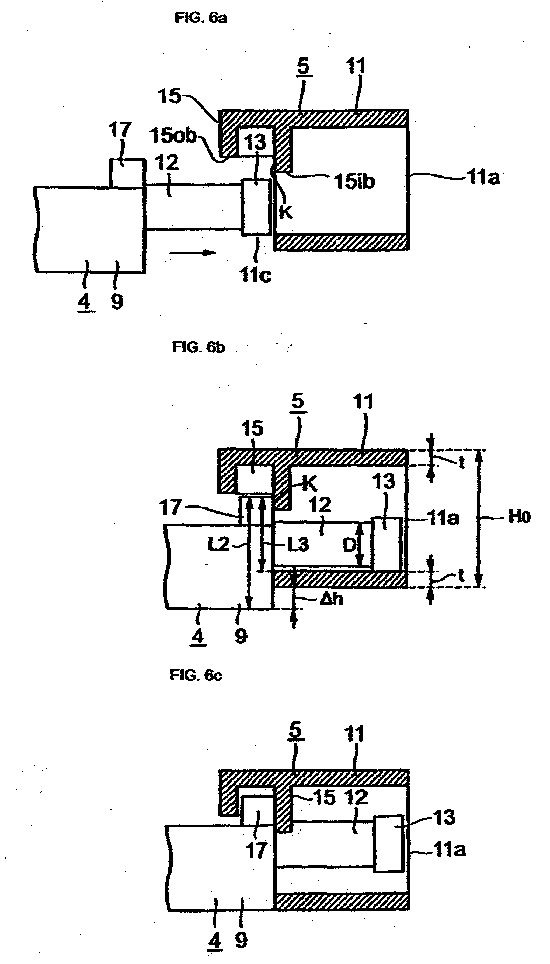

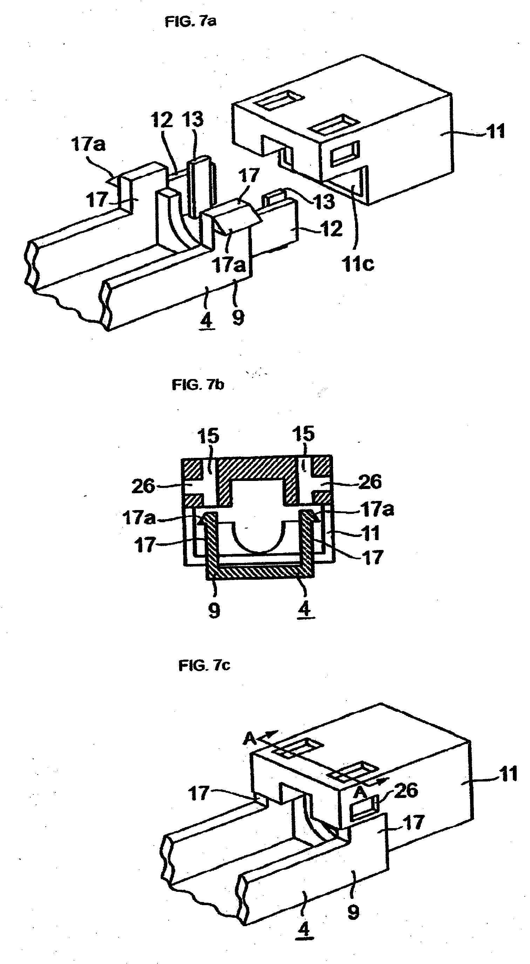

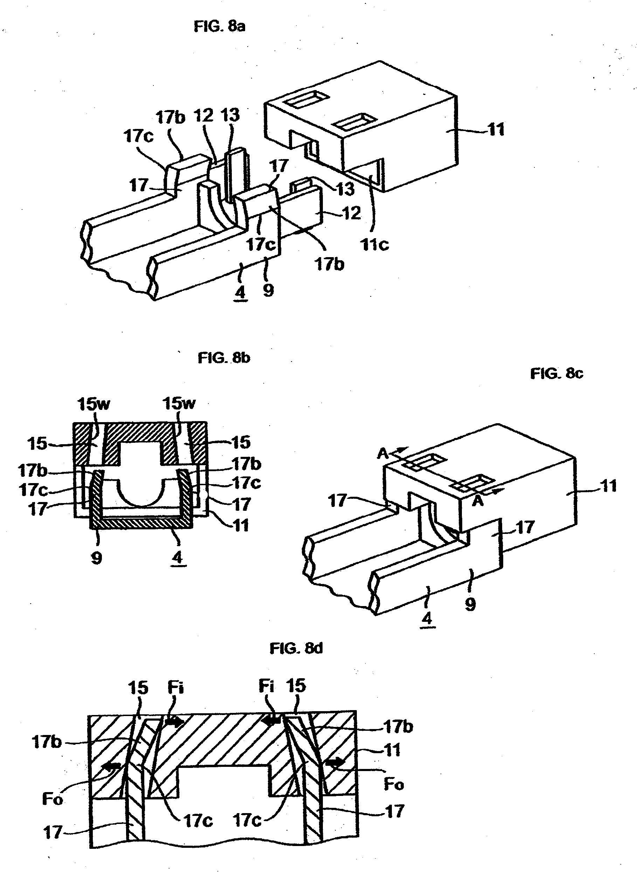

Figs. 6a, 6b, and 6c are illustrations for explanation of a step of assembling a package module of a second embodiment. Figs. 7a, 7b, and 7c are illustrations for explanation of fit projections and fit-receiving portions of a package module in another embodiment. Figs. 8a, 8b, 8c, and 8d are illustrations for explanation of fit projections and fit-receiving portions of a package module in still another embodiment.

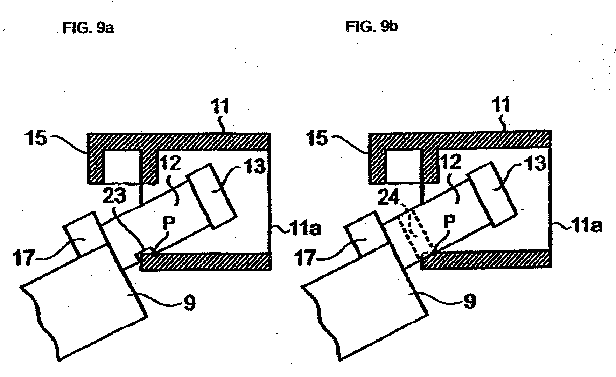

Figs. 9a and 9b are illustrations for explanation of modifications of the arms shown in the first embodiment.
Fig. 10 is an illustration for explanation of a package module developed by the applicant of the present invention.
Fig. 11 schematically illustrates an adapter case that is at the preceding stage of development. Fig. 12 is an illustration for explanation of an adapter case and arms for fixing a connector in a known art. Fig. 13 is an illustration for explanation of an adapter case and arms for fixing a connector in another known art.

### Best Mode for Carrying Out the Invention

Embodiments according to the present invention will be described below with reference to the drawings. In the embodiments described below, the same reference numerals have been used as in the package module shown in Fig. 10 for similar components, and common explanations of these components are omitted.

The package module of the first embodiment is an optical communication module and has a characteristic structure (slanting-arm-insertion-type) described below. The package module of the first embodiment has the same structure as the package module 1 shown in Fig. 10, except for the structure described below.

While the adapter case 11 of the adaptor 5 shown in Fig. 10 has an opening at the bottom (see Fig. 11), the adapter case 11 of the first embodiment, as shown in Fig. 1, has a closed bottom. The adapter case 11 has sides with no opening. An opening at an end of the adapter case 11 functions as an entry 11a from which an external connector (optical connector in the first embodiment) is to be inserted. The other opening at the other end functions as a connection hole 11c used for attachment to a module case 4 (a base case 9).

Fit-receiving portions 15 (15A and 15B) are mounted to the upper wall adjacent to the connection hole 11c of the adapter case 11 such that fit-receiving openings 16 (16A and 16B) face down. Fit projections 17 (17A and 17B) for fitting into the fit-receiving portions 15 (15A and 15B) are mounted to the base case 9. In the first embodiment, as shown in Fig. 2, the opening width, H, defined between the downward end of each of the fit-receiving portions 15 of the adapter case 11 and the bottom of the connection hole 11c is less than the vertical height, L2, of each of the fit projections 17 of the module case 4 (base case 9).

In the first embodiment, the vertical length, L3, between the top of the fit projection 17 and the lowermost part of each of the arms 12 including the nails 13 (i.e., the bottom of the nails 13 in the first embodiment) is greater than or equal to the opening width H defined between the lower end of the fit-receiving portion 15 of the adapter case 11 and the lower surface of the connection hole 11c (L3 ≥ H). Specifically, where Ho is the outer height of the adapter case 11 in the vertical direction, Hi is the inner height of the adapter case 11 in the vertical direction, t is the thickness of each of upper and lower walls of the adapter case 11, and L1 is the vertical length between the top of the adapter case 11 and the downward end of the fit-receiving portion 15, the opening width H of the connection hole 11c of the adapter case 11 in the height direction is expressed by the formula, H = Ho - t - L1. Consequently, in the first embodiment, the vertical length L3 is a dimension satisfying the formula, L3 ≥ Ho - t - L1.

Therefore, in the first embodiment, for example, when these arms 12 and the nails 13 of the module case 4 are inserted into the adapter case 11 through the connection hole 11c of the adapter case 11 and the arms 12 are then moved forward along the bottom wall in order to attach the adapter case 11 to the module case 4, as shown in Fig. 3, these fit projections 17 of the module case 4 come into contact with the outer wall face of these fit-receiving portions 15 of the adapter case 11 and thus the forward movement of the module case 4 stops. This prevents the fit projections 17 of the module case 4 from fitting into the fit-receiving portions 15 of the adapter case 11.

In the first embodiment, therefore, attaching the adapter case 11 to the module case 4 (base case 9) is performed by the characteristic steps described below. As shown in Fig. 5a, for example, the nails 13 and the arms 12 are inserted into the adapter case 11 through the connection hole 11c of the adapter case 11 while the base case 9 and arms 12 are inclined in an upward direction to the bottom face of the adapter case 11.

When the insertion of the arms 12 and the nails 13 continues, as shown in Fig. 5b, the outer wall of the base case 9 comes into contact with the edge of the bottom wall of the adapter case 11, thus stopping the insertion of the base case 9 and the arms 12. In the first embodiment, the length of each of the arms 12 is designed such that the nails 13 do not come into contact with the upper wall of the adapter case 11 before the outer wall of the base case 9 comes into contact with the bottom wall of the adapter case 11. In the embodiment shown in Fig. 5b, when the outer wall of the base case 9 comes into contact with the edge of the bottom wall of the adapter case 11, the nails 13 are not in contact with the upper wall of the adapter case 11. However, the nails 13 may come into contact with the upper wall of the adapter case 11 simultaneously when the outer wall of the base case 9 comes into contact with the edge of the bottom wall of the adapter case 11.

The base case 9 and these arms 12 are then pivoted about contact parts P serving as pivot points, the contact parts P being in contact with the edge of the bottom wall of the adapter case 11, until the base case 9 and the arms 12 are horizontal to the bottom face of the adapter case 11, as shown in Fig. 5c. In the first embodiment, the parts P, where the arms 12 come into contact with the edge of the bottom wall of the adapter case 11 when the insertion of the arms 12 stops, of the arms 12 function as pivot-point parts.

In the first embodiment, during pivoting of the base case 9 and the arms 12, the projecting edges of the fit projections 17 come into contact with opening edges of the fit-receiving portions 15 of the adapter case 11 and, as shown in Fig. 4a, a wall, by which the fit-receiving openings are defined, adjacent to the module case is slightly deformed. Therefore, in the first embodiment, the distance β1 between each of the pivot-point parts P of the module case 4 and a point Q (see Fig. 4b) of each of the fit projections 17 farthest away from the pivot-point part P is slightly longer than the distance β2 between a lower end X of the connection hole 11c of the adapter case 11 and an inner end Y, which is adjacent to the module case, of each of the fit-receiving openings of the fit-receiving portions 15.

Moreover, in the first embodiment, in order to facilitate a pivoting operation in which the base case 9 and the arms 12 are pivoted while these fit projections 17 are in contact with the opening edges of the fit-receiving portions 15, the inner ends 18, which are adjacent to the module case, of these fit-receiving openings of the fit-receiving portions 15 are removed or rounded. In place of removed or rounded inner ends 18, contact parts of the fit projections 17 in contact with the fit-receiving portions may be removed or rounded.

Furthermore, in the first embodiment, the positions of the fit-receiving portions 15 and the fit projections 17 are designed such that, when the base case 9 and the arms 12 are horizontal to the bottom face of the adapter case 11 by being pivoted, the fit projections 17 of the base case 9 (module case 4) are opposed to the fit-receiving openings 16 of the fit-receiving portions 15 of the adapter case 11.

After the base case 9 and the arms 12 are positioned horizontal to the bottom face of the adapter case 11 by being pivoted thereof, as shown in Fig. 5d, the module case 4 is moved upward relative to the bottom face of the adapter case 11 and thereby the fit projections 17 of the module case 4 are fit into the fit-receiving portions 15 of the adapter case 11. Attaching the adapter case 11 to the base case 9 (module case 4) is thus completed.

In the first embodiment, when the fit projections 17 are fit into the fit-receiving portions 15, the bottom of the adapter case 11 is flush with that of the module case 4 and the center line O₁₂ (see Fig. 5c) of each of the arms 12 of the module case 4 in the longitudinal direction matches with the center position O₁₁ of the adapter case 11. Specifically, where Δh is the upward distance of the module case 4 (base case 9) relative to the adapter case 11 when the module case 4 is shifted from a state shown in Fig. 5c to that in Fig. 5d and D is the height of the arms 12, the upward distance Δh is given by the formula:$Δh = Ho / 2 - D / 2 - t .$
The vertical length L2 between each of the projecting edges of the fit projections 17 of the module case 4 and the bottom of the module case 4 is a dimension satisfying the formula, L2 = L3 + t + Δh.

In the first embodiment, the fit projections 17, a periphery of the base case 9 where the fit projections 17 are mounted, these arms 12, and the nails 13 constitute an adapter-case connection section α that is inserted into the adapter case through the connection hole 11c of the adapter case 11 (see Fig. 5c).

In the first embodiment, after being attached to the adapter case 11, the base case 9 in which the circuit board 2 and the optical module unit 3 are accommodated is combined with a lid case 10, and therefore, a package module 1 is assembled. In the package module 1, when attached to the base case 9 (module case 4), the adapter case 11 has a single opened portion, the entry 11a. When an optical connector is inserted into the adapter case 11, the entry 11a can be substantially blocked with the optical connector. This keeps dust from externally entering the adapter case 11 when an optical fiber of the inserted optical connector is optically coupled to an optical fiber passing through a ferrule of the optical module unit 3. As a result, when the optical connector is inserted to or extracted from the adapter case 11, degradation of the optical coupling conditions resulting from dust is avoided.

In the first embodiment, the bottom of the base of the arm 12 is higher than the bottom surface of the base case 9. At the time of the insertion of these arms 12 to the adapter case 11, an outer portion of the base case 9 under the bottom of each of the bases of the arms 12 comes into contact with the bottom wall of the adapter case 11, and thereby stopping the insertion of the arms 12. The arms 12 may have recesses 23 in the bottom at the bases or the adjacent areas, as shown in Fig. 9a, so that inner faces of the recesses 23 have the function of stopping the insertion of the arms 12. When the arms 12 have the recesses 23 shown in Fig. 9a or slots 24 shown in Fig. 9b, portions P at the opening edges of the recesses 23 or the slots 24 may function as pivot-point parts.

Moreover, as an alternative to stopping by the lower outer portion of the base case 9 or the recesses 23 of the arms 12, the nails 13 may stop the insertion of the arms 12 by coming into contact with the upper wall of the adapter case 11.

Additionally, in the first embodiment, in a step of attaching the adapter case 11 to the module case 4, the projecting edges of the fit projections 17 are in contact with the opening edges of the fit-receiving portions 15 during pivoting of the module case 4. However, the projecting edges of the fit projections 17 may be out of contact with the opening edges of the fit-receiving portions 15. In such an arrangement, the vertical length L3 between the top of each of the fit projections 17 of the module case 4 and the lowermost part of each of the nails 13 is a dimension satisfying the formula, L3 ≥ Ho - t - L1, and the distance β1 between Q and P shown in Fig. 4b is shorter than the distance β2 between X and Y (β1<β2). In the structure in which the projecting edges of these fit projections 17 do not come into contact with the opening edges of the fit-receiving portions 15, if a package module is significantly small, the dimensions of the fit between the fit-receiving portions 15 and the fit projections 17 are small, and therefore, the fit between them is susceptible to a disconnection. Therefore, in a small package module, a structure is preferable in which the projecting edges of the fit projections 17 come into contact with the opening edges of the fit-receiving portions 15 so as to have larger dimensions of the fit between the fit-receiving portions 15 and the fit projections 17.

A second embodiment will now be described below. In the second embodiment, the same reference numerals have been used as in the first embodiment for similar components, and common explanations of these components are omitted.

In the second embodiment, a horizontal-arm-insertion-type package module is described. Specifically, in the second embodiment, the vertical length L3 (see Fig. 2) between the top of each of the fit projections 17 of the module case 4 and the bottom of the nail 13 is a dimension satisfying the formula, L3 ≤ Ho - t - L1. In other words, the vertical length L3 is smaller than the opening width H (H = Ho - t- L1) of the connection hole 11c of the adapter case 11 in the height direction.

In the second embodiment, therefore, the adapter case 11 is attached to the module case 4 in the following way. As shown in Fig. 6a, the arms 12 and these nails 13 of the module case 4 are inserted into the adapter case 11 through the connection hole 11c of the adapter case 11 and the module case 4 is moved forward relative to the adapter case 11 while the arms 12 are moved along the bottom wall of the adapter case 11 relative to the adapter case 11.

In the second embodiment, the bottom, 15ib, of an internal section, adjacent to the inside, of each of the fit-receiving portions 15 of the adapter case 11 is lower than the bottom 15ob of an external section, adjacent to the module case, of the fit-receiving portion 15. Therefore, as shown in Fig. 6b, when the module case 4 is moved forward until these fit projection 17 of the module case 4 reach a location opposed to the fit-receiving openings of these fit-receiving portions 15 of the adapter case 11, the fit projections 17 come into contact with an inner end of the internal section of each of the fit-receiving portions 15 and thereby stopping the forward movement of the module case 4. In the second embodiment, the inner end, K, of the internal section of the fit-receiving portion 15 functions as an insertion stopping part.

As shown in Fig. 6c, the fit projections 17 of the module case 4 are fit into these fit-receiving portions 15 of the adapter case 11 by moving the module case 4 upward relative to the adapter case 11. In the second embodiment, as with the first embodiment, it is designed that, when the fit projections 17 are fit into the fit-receiving portions 15, the bottom of the adapter case 11 is flush with that of the module case 4 and the center line of each of the arms 12 in the longitudinal direction matches with the center line of the adapter case 11. Specifically, the upward distance Δh (see Fig. 6b) of the module case 4 relative to the adapter case 11 when the module case 4 is shifted from a state shown in Fig. 6b to that in Fig. 6d is given by the formula, Δh = Ho/2 - D/2 - t. The vertical length L2 between each of the projecting edges of the fit projections 17 of the module case 4 and the bottom of the module case 4 is a dimension satisfying the formula, L2 = L3 + t + Δh.

As described above, the adapter case 11 is attached to the module case 4 in the second embodiment.

The attachment of the adapter case 11 to the module case 4 in the second embodiment is easier than that in the first embodiment. However, the adapter case 11 can be readily detached from the module case 4. Therefore, the following arrangements may be provided.

For example, as shown in Fig. 7a, the fit projections 17 of the module case 4 have external nails 17a at their tips. Fig. 7c schematically illustrates when these arms 12 of the module case 4 shown in Fig. 7a are inserted into the adapter case 11 through the connection hole 11c of the adapter case 11 until the fit projections 17 are opposed to the fit-receiving openings of the fit-receiving portions 15. Fig. 7b is a cross-sectional view taken along line A-A of Fig. 7c. As shown in Fig. 7b, nail engaging parts 26 to which the external nails 17a of the fit projections 17 are engaged so as not to be disconnected when the fit projections 17 are fit into the fit-receiving portions 15 are provided with the fit-receiving portions 15. In this embodiment, the nail engaging parts 26 consisting of an opening are disposed so as to be opposed to the external nails 17a of the fit projections 17 when the fit projections 17 of the module case 4 are fit into the fit-receiving portions 15 of the adapter case 11 and when the bottom of the module case 4 is flush with that of the adapter case 11. The external nails 17a of the fit projections 17 are engaged with the nail engaging parts 26 of the fit-receiving portions 15 so as not to be disconnected, and therefore, the bottom of the module case 4 is held to be flush with that of the adapter case 11. Additionally, the adapter case 11 is kept from being disconnected from the module case 4 with reliability.

In this embodiment, the external nails 17a mounted on the tips of the fit projections 17 are projected outwardly. However, the external nails 17a may be projected inwardly. In such an arrangement, the nail engaging parts 26 of the fit-receiving portions 15 of the adapter case 11 are positioned in locations corresponding to where the external nails 17a are formed.

The arrangement described below may be provided in order to prevent the adapter case 11 from being disconnected from the module case 4. As shown in Fig. 8b, for example, the fit-receiving portions 15 of the adapter case 11 have walls 15w for conforming to sidewalls of the fit projections 17, and the walls 15w are inwardly inclined. As shown in Figs. 8a and 8b, the fit projections 17 of the module case 4 have bends 17c for inwardly bending the leading ends of the fit projections 17, and tips from the bends 17c onward function as tapered parts 17b. Fig. 8c schematically illustrates when the arms 12 of the module case 4 shown in Fig. 8a are inserted into the adapter case 11 through the connection hole 11c of the adapter case 11 and the fit projections 17 are opposed to the fit-receiving openings of the fit-receiving portions 15. Fig. 8b is a cross-sectional view taken along line A-A of Fig. 8c.

In such an arrangement of the fit-receiving portions 15 and fit projections 17, when the fit projections 17 are inserted into the fit-receiving portions 15, for example, the fit projections 17 are moved forward into the fit-receiving portions 15 while being elastically deformed in an inward direction due to the slope of the walls 15w of the fit-receiving portions 15, a state shown in Fig. 8d is the result. Specifically, the tips of the fit projections 17 come into contact with inner faces of the fit-receiving portions 15 and press the contact faces with a pressure of Fi in an inward direction. The bends 17c of the fit projections 17 come into contact with outer faces of the fit-receiving portions 15 and press the contact faces with a pressure of Fo in an outward direction. The pressures Fi and Fo enable the fit projections 17 to be fastened to the fit-receiving portions 15, and therefore, the fit projections 17 are less prone to being disconnected from the fit-receiving portions 15.

In this embodiment, the tapered parts 17b of the fit projections 17 are inwardly tapered. However, the tapered parts 17b may be outwardly tapered. The walls 15w of the fit-receiving portions 15 are inwardly inclined. However, the walls 15w may be outwardly inclined.

The present invention is not limited to the first and the second embodiments and may have various embodiments. For example, in the first and second embodiments, the base case 9 has the fit projections 17 at its periphery, but the fit projections 17 may be mounted on the base of the arms 12. In the first and second embodiments, the module case 4 has the base case 9 and the lid case 10 in such a way that both cases are apart in a vertical direction, but the module case 4 may have another structure.

Additionally, in the first and second embodiments, the bottom of each of the nails 13 is lower than that of each of the arms 12, but both bottoms may be equal in height. The bottom of the nail 13 may be higher than that of the arm 12. In such an arrangement, since the lowermost part of the arm 12 including the nail 13 is the bottom of the arm 12, the vertical length L3 is defined between the bottom of the arm 12 and each of the projecting edges of the fit projections 17.

Moreover, the arrangement of the first embodiment may have the arrangements shown in Figs. 7a to 7c or Figs. 8a to 8d.

The package modules according to the first and second embodiments are optical communication modules. However, the present invention may be of any module other than optical communication module, as long as the package module is such that a circuit board is accommodated in a module case. For example, the present invention is applicable to a high-frequency circuit module in which a high-frequency circuit disposed on a circuit board is accommodated in a case or a circuit module having a circuit through which low-frequency current or direct current passes.

### Industrial Applicability

As described above, the present invention has high reliability of strength or connector connection and facilitates cost reduction by simplifying a manufacturing process. Therefore, it is significantly effective to apply the present invention to a general-purpose package module.

## Claims

1. A package module comprising a module case accommodating a circuit board and an adapter for connecting an external connector, the adapter being attached to the module case, wherein the adapter includes an adapter case having sides with no opening; an opening defined by the sides of the adapter case at one end functions as an entry to receive the external connector; the other opening of the adapter case at the other end functions as a connection hole for being attached to the module case; a fit-receiving portion is mounted on the upper wall adjacent to connection hole of the adapter case in such a way that a fit-receiving opening faces down; the module case includes an adapter-case connection section to be inserted into the connection hole of the adapter case; the adapter-case connection section includes a fit projection to be fit into the fit-receiving portion of the adapter case and a pivot-point part that comes into contact with the adapter case and that functions as a pivot point of the adapter-case connection section when the adapter-case connection section is inserted into the adapter case up to a specified position through the connection hole of the adapter case; an arm projecting forward is integrated with the adapter-case connection section; a nail for fixing the external connector inserted into the adapter case is mounted on the tip of the arm, the opening width defined between the downward end of the fit-receiving portion of the adapter case and the bottom of the connection hole is smaller than the vertical height of the fit projection of the module case; the fit projection of the module case is arranged so as to be opposed to the fit-receiving opening of the fit-receiving portion of the adapter case when the adapter-case connection section of the module case is horizontal to the bottom of the adapter case after being inserted up to a specified position through the connection hole of the adapter case while being inclined in an upward direction relative to the bottom of the adapter case and after being pivoted about the pivot-point part serving as a pivot point; and the fit projection is fit into the fit-receiving portion by arranging the fit projection of the module case and the fit-receiving portion of the adapter case in an opposed manner and by moving the module case upward relative to the adapter case so that the adapter case is attached to the module case.

2. The package module according to claim 1, wherein the following formulae are satisfied: $L 3 \geq Ho - t - L 1$ $L 2 = L 3 + t + Δh$ $Δh = Ho / 2 - D / 2 - t$
where Ho is the outer height of the adapter case at the connection hole in the vertical direction; t is the thickness of each of the upper and lower walls of the adapter case; L1 is the vertical length between the top of the adapter case and the downward end of the fit-receiving portion; L2 is the vertical length between the projecting edge of the fit projection of the module case and the bottom of the module case; L3 is the vertical length between the top of the fit projection and the lowermost part of the arm including the nail; D is the height of the arm of the module case; and Δh is the upward distance of the module case relative to the adapter case when the module case is shifted from a state in which the adapter-case connection section of the module case is inserted into the adapter case until the fit projection is opposed to the fit-receiving opening of the fit-receiving portion to a state in which the fit projection is fit into the fit-receiving portion and the adapter case is attached to the module case.

3. The package module according to claim 1, wherein in order that the adapter-case connection section inserted into the adapter case is pivoted about the pivot-point part serving as a pivot point of the adapter-case connection section while the projecting edge of the fit projection is in contact with an opening edge of the fit-receiving portion of the adapter case, the distance between the pivot-point part and a portion of the fit projection farthest away from the pivot-point part is set in accordance with the distance between a lower end of the connection hole of the adapter case and an inner end of the fit-receiving opening of the fit-receiving portion, the inner end being adjacent to the module case.

4. The package module according to claim 1, wherein, in the module case, at least one of a light-emitting device and a photoreceptor device is disposed and an optical fiber optically coupled to said at least one of the light-emitting device and a photoreceptor device is arranged so that the package module functions as an optical communication module; and the adapter is to be connected to an optical connector having an optical fiber to be optically coupled to the optical fiber arranged in the module case.

5. A package module comprising a module case accommodating a circuit board and an adapter for connecting an external connector, the adapter being attached to the module case, wherein the adapter includes an adapter case having sides with no opening; an opening defined by the sides of the adapter case at one end functions as an entry to receive the external connector; the other opening of the adapter case at the other end functions as a connection hole for being attached to the module case; a fit-receiving portion is mounted on the upper wall adjacent to the connection hole of the adapter case in such a way that a fit-receiving opening faces down; the module case includes an adapter-case connection section to be inserted into the connection hole of the adapter case; the adapter-case connection section includes a fit projection to be fit into the fit-receiving portion of the adapter case; an arm projecting forward is integrated with the adapter-case connection section; a nail for fixing the external connector inserted into the adapter case is mounted on the tip of the arm; the adapter case includes an insertion stopping portion for stopping forward movement of the adapter-case connection section when the adapter-case connection section is inserted into the adapter case through the connection hole of the adapter case and moved forward to a position where the fit projection of the adapter-case connection section is opposed to the fit-receiving opening of the fit-receiving portion of the adapter case; and the fit projection is fit into the fit-receiving portion by inserting the adapter-case connection section into the adapter case through the connection hole of the adapter case, moving the adapter-case connection section forward while the arm of the adapter-case connection section are moved along the bottom wall of the adapter case until the adapter-case connection section is stopped by the insertion stopping portion, arranging the fit projection of the module case and the fit-receiving opening of the fit-receiving portion of the adapter case in an opposed manner, and then moving the module case upward relative to the adapter case so that the adapter case is attached to the module case.

6. The package module according to claim 5, wherein, in the module case, at least one of a light-emitting device and a photoreceptor device is disposed and an optical fiber optically coupled to said at least one of the light-emitting device and the photoreceptor device is arranged so that the package module functions as an optical communication module; and the adapter is to be connected to an optical connector having an optical fiber to be optically coupled to the optical fiber arranged in the module case.
